# EUROPÄISCHE PATENTSCHRIFT

(11) **EP 1 549 719 B1**
(45) Veröffentlichungstag und Bekanntmachung des Hinweises auf die Patenterteilung: **27.08.2014**
(21) Anmeldenummer: 03769346.2
(22) Anmeldetag: 02.10.2003
(51) Int. Cl.: C09D 197/02, C09D 101/02, C09D 5/03, C04B 18/02, C04B 18/04

(54) **SPRITZFÄHIGES BESCHICHTUNGSMITTEL, SEINE HERSTELLUNG, WEITERVERARBEITUNG UND VERWENDUNG**
SPRAYABLE COATING AGENT AND PRODUCTION, FURTHER PROCESSING, AND USE THEREOF
AGENT DE REVÊTEMENT POUVANT ÊTRE MOULE PAR INJECTION, PROCEDE POUR LE PRODUIRE ET POUR L'USINER ET SON UTILISATION

(30) Priorität: 07.10.2002 DE 10246632
(43) Veröffentlichungstag der Anmeldung: 06.07.2005
(73) Patentinhaber: Bumm, Christian, 63927 Bürgstadt (DE); Weigand, Andreas, 97956 Werbach (DE)
(72) Erfinder: BUMM, Christian, 63927 Bürgstadt (DE); WEIGAND, Andreas, 97956 Werbach (DE); FREHSE, Walter, 63928 Eichenbühl, Unterfr. (DE)
(74) Vertreter: Sieckmann, Ralf
(86) Internationale Anmeldenummer: PCT/EP2003/010910
(87) Internationale Veröffentlichungsnummer: WO 2004/033572

(56) Entgegenhaltungen:
- WO-A-03/33570
- DE-A- 3 606 167
- DE-A- 4 126 970
- DE-A- 4 317 957
- DE-A- 19 714 729
- DE-U- 9 402 123
- DE-U- 29 613 699

## Beschreibung

Die Erfindung betrifft ein spritzfähiges Beschichtungsmittel hergestellt mit einem Granulat, seine Herstellung, eine Trockenmischung und seine Verwendung zur dekorativen Beschichtung, Veredelung und Strukturierung von Oberflächen, speziell von Wänden und Decken.

Aus den Gebrauchsmustern DE 296 21 864 U1, DE 296 04 493 U1 sowie aus den Offenlegungsschriften DE 43 17 957 A1 und 36 06 167 A1 sind spritzfähige Beschichtungsmittel zur oberflächenstrukturierten Wand- und Deckenverkleidung als Alternativen zur flüssigen Raufaser oder zu Raufasertapeten bekannt. Dabei handelt es sich um eine Stoffmischung bestehend aus Cellulosefasern mit Härtungsmitteln, Bindemitteln, Farbmitteln und Wasser. Zusätze von anderen cellulosischen und anorganischen Stoffen werden ebenfalls beansprucht. Die Oberflächenstruktur wird hier durch Variation des Luftdrucks beim Aufspritzen sowie durch Veränderung der Konsistenz der Masse verändert. Durch das Zerplatzen von Lufteinschlüssen entsteht nach der DE 296 04 493 U1 eine dem Rauputz entsprechende Oberflächenstruktur.

Ebenso bekannt sind auf Cellulosefasern basierende Trockenmischungen, die sich in Wasser auflösen und zur Wand- und Deckenbeschichtung verwendet werden können. Bekannte Handelsprodukte zur Wand- und Deckenbeschichtung sind beispielsweise Naturlan Nature-Floc^{R} auf Basis von Baumwollfasern und Faserit auf Basis von Holz, Marmormehl, Zuschlagstoffen und pflanzlichen Leimen.

Mit den genannten Beschichtungsmitteln und Verfahren ist es jedoch nur möglich Oberflächenstrukturen zu gestalten, die mit einer breiartigen pastös eingestellten Masse und veränderter Druckluftzufuhr aufgespritzt werden. Da die Cellulose in feine Fasern zerfällt, unterscheidet sich diese Struktur grundlegend von rein körnigen Strukturen, wie man sie von Reibeputzen (körnige Zuschlagstoffe wie Marmormehl, Sand oder Silikat) kennt. Die Einstellung und Reproduktion einer gleichmäßigen Oberflächenstruktur über den Luftdruck ist kompliziert und aufwendig und nur von einem geübten Fachmann durchzuführen. Auch bei Reibe- und Strukturputzen ist es schwierig, eine gleichmäßige körnige Struktur auf Wand und Decke anzubringen. Überkopf arbeiten ist schwierig und nur mit handwerklichem Geschick möglich.

Der Erfindung liegt daher die Aufgabe zugrunde, ein weiteres spritzfähiges Beschichtungsmittel in Form eines Spritzputzes zu schaffen, welches zur oberflächenstrukturierten Wand- und Deckenverkleidung dient und das ein einfaches, schnelles und kostengünstiges Beschichten von Oberflächen, eine Strukturvielfalt und auch eine unkomplizierte maschinelle Verarbeitung ermöglicht. Darüber hinaus soll die Oberflächenstruktur gleichmäßig und auch in einem Arbeitsgang ohne Nacharbeiten optisch der einer klassischen Rauputzstruktur gleichzustellen sein.

Die Aufgabe der Erfindung wird durch die in Anspruch 1 aufgeführten Merkmale gelöst, wobei die gewünschte Obberflächenstruktur von fein bis grob durch die Korngrößenverteilung des Granulats eingestellt wird.

Die Erfindung betrifft daher ein spritzfähiges Beschichtungsmittel hergestellt mit einem Granulat, wobei das Granulat mit Wasser und gegebenenfalls mit konventionellen Hilfs- und/oder Zusatzstoffen zu einer steifen, breiig-pastösen Beschichtungsmasse mit einer Viskosität von 300 bis 80.000 mPas bei 20°C, verrührt wird und diese Beschichtungsmasse 5 bis 40 Gew.-% Granulat, bis 60 Gew.-% Wasser und 0 bis 95 Gew.-% Hilfs- und/oder Zusatzstoffe enthält, wobei das Granulat als Ausgangsstoffe Cellulose und/oder regenerierte Cellulose und/oder cellulosische Rohstoffe sowie ihre Mischungen mit synthetischen Fasern und/oder anorganischen Fasern und/oder anorganischen grobkörnigen, feinkörnigen oder pulverförmigen Stoffen und/oder organischen Polymermaterialien und/oder Hilfs- bzw. Zusatzstoffen enthält, wobei die Ausgangsstoffe und/oder ihre Mischungen zu einem Pressling gepresst, gemahlen und gegebenenfalls gesiebt werden, wobei das Granulat die Dichte von 1 bis 5 g/cm3 aufweist, wobei das Granulat eine Feuchtigkeit von 1 bis 20 Gew.-% aufweist, wobei das Granulat ein Schüttgewicht von 150 bis 1500 g/l aufweist und das gemahlene und gegebenenfalls gesiebte Granulat die Korngrößenverteilung von
0 - 40,7 Gew.-% 0 - 600µm
5 - 55 Gew.-% 600 -1250µm 5 - 95 Gew.-% > 1250µm
oder
0 -15 Gew.-% 0 - 800 µm
10 - 85 Gew.-% 800 -2000µm
0 - 15 Gew.-% > 2000µm
oder
0,2 - 5 Gew.-% < 100µm
1 - 15 Gew.-% 100 - 250µm
4 - 25 Gew.-% 250 - 400µm
8 - 30 Gew.-% 400 - 600µm
10 - 35 Gew.-% 600 - 800µm
15 - 40 Gew.-% 800 - 1250pm
7 - 20 Gew.-% > 1250µm
oder
5 - 10 Gew.-% < 800µm
10 - 50 Gew.-% 800 -1250µm
25 - 70 Gew.-% 1250 - 1600µm
7 - 15 Gew.-% 1600 - 2000µm
3 - 5 Gew.-% > 2000µm
aufweist.

Die faserförmigen und grobkörnigen Ausgangsstoffe werden vor der Granulierung nach bekannter Verfahrensweise beispielsweise mit Bexmill BM oder Siebmühle FC, Fa. Hosokawa Bepex GmbH, oder Condux-Schneidmühle oder Hammermühle gemahlen.

Das Mahlgut weist die Korngrößenverteilung von

| | | | |
|---|---|---|---|
| 45 - 65 | Gew.-% vorzugsweise | 50 - 60 | Gew.-% > 40µm |
| 25 - 45 | Gew.-% vorzugsweise | 30 - 40 | Gew.-% > 50µm |
| 5 - 20 | Gew.-% vorzugsweise | 10 - 15 | Gew.-% > 63µm |
| 0 - 10 | Gew.-% vorzugsweise | 2 - 5 | Gew.-% > 90µm |
| 0 - 5 | Gew.-% vorzugsweise | 1 - 3 | Gew.-% >100µm |

auf.

Zur Herstellung des Granulats werden die vorgemahlenen Ausgangsstoffe bzw. ihre Mischungen mit Hilfe eines handelsüblichen Kompaktors nach bekannter Verfahrensweise zu einem Preßling gepreßt. Dieser wird in Abhängigkeit der gewünschten Struktur, des gewünschten optischen Effektes bzw. der gewünschten Rauigkeit der zu erstellenden Oberfläche auf eine spezielle Korngröße gemahlen und gegebenenfalls zur Entfernung von bestimmten Feinanteilen, beispielsweise mit einer Vibrationssiebmaschine gesiebt.

Den Ausgangsstoffen bzw. Stoffgemischen kann vor der Kompaktierung, Mahlung und Siebung ein Teil der Hilfs- oder Zusatzstoffe zugesetzt werden.

Den Ausgangsstoffen bzw. Stoffgemischen wird vor der Kompaktierung, Mahlung und Siebung Wasser zugesetzt.

Demgemäß werden die Ausgangsstoffe und/oder ihre Mischungen mit Hilfe eines handelsüblichen Kompaktors nach bekannter Verfahrensweise zu einem Preßling gepreßt. Wir verweisen z.B. auf Ullmanns Encyclopädie der technischen Chemie, 4. Aufl., 1972, Bd. 2, S. 315-320, zu Brikettieren. Beispielhaft seien auch Flachmatrizen-Pressen z.B. Type 38-70 Fa. Kahl) genannt. Dieser wird anschließend entsprechend der Anwendung gemahlen und gegebenenfalls gesiebt. Zur Mahlung verweisen wir auf Ullmann, ebenda, Bd. 2, S. 1-23, zu Verkleinern.

Zur Kompaktierung kann jegliche Art von cellulosischem Material verwendet werden. Es ist ebenso möglich, vor der Kompaktierung zur Verbesserung der Produkteingeschaften und/oder zu Erzielung bestimmter optischer Effekte der Cellulose und/oder den cellulosischen Rohstoffen synthetische Fasern und/oder anorganische Fasern und/oder organische Stoffe und/oder anorganische Stoffe und/oder andere Hilfs- und Zusatzstoffe beizumischen.

Demnach beträgt die Dichte des Granulates vorzugsweise 1,2 bis 3,1 g/cm³. Das Granulat enthält vorzugsweise 2 bis 12% Wasser. Das Schüttgewicht des Granulates beträgt vorzugsweise 170 bis 600 g/l.

Die Cellulose ist vorzugsweise ausgewählt aus der Gruppe bestehend aus Baumwolle, Linters, Zellstoff, Papier, Flachs, Hanf, Jute, Kupferseide, Rayon, Lyocel, Buntfasern, der cellulosische Rohstoff ist vorzugsweise Holz, Holzspäne, Sägespäne, Stroh und/oder Kork. Der cellulosische Anteil im Granulat beträgt 40 bis 100 Gew.-%, vorzugsweise 60 bis 90 Gew.-%.

Die synthetischen Fasern sind vorzugsweise Polyester-, Polyamid-, Polyacrylnitril-, Polyurethan-, Polyethylen-, Polypropylen und/oder Acetatfasern. Der Anteil der synthetischen Fasern im Granulat beträgt 0 bis 60 Gew.-%, vorzugsweise 5 bis 30 Gew.-%.

Die anorganischen Fasern sind vorzugsweise Silikat-, Wasserglas-, Glas-, Metall-, und/oder Kohlenstofffasern. Der Anteil der anorganischen Fasern im Granulat beträgt 0 bis 60 Gew.-%, vorzugsweise 5 bis 30 Gew.-%.

Die anorganischen grobkörnigen, feinkörnigen oder pulverförmigen Stoffe sind nach einer bevorzugten Ausführungsform Marmor, Quarzsand, Kieselsäure, Kreide, Gips, Carbonate, und/oder Metalloxide. Der Anteil der anorganischen Zusätze im Granulat beträgt 0 bis 40 Gew.-%, vorzugsweise 5 bis 25 Gew.-%.

Die organischen Polymermaterialien sind nach einer bevorzugten Ausführungsform Polyethylen, Polypropylen, Polytetrafluorethylen (Teflon®), Polystyrolschaum (Styropor@), Acrylate, Gummi und/oder andere modifizierte und unmodifizierte Polysaccharide. Der Anteil der organischen Polymermaterialien im Granulat beträgt 0 bis 40 Gew.-%, vorzugsweise 5 bis 25 Gew.-%.

Die Hilfs- und Zusatzstoffe im Beschichtungsmittel sind organische oder anorganische Stoffe, Farbmittel, insbesondere organische oder anorganische Farbmittel, Bindemittel, Härtungsmittel, Dispergiermittel, Konservierungsmittel, Fungizide, Glimmer, schwer entflammbare Stoffe, Nanopartikel jeglicher Art und/oder Wasser.

Bevorzugt ist der Zusatzstoff im Beschichtungsmittel ein weißes oder buntes organisches oder anorganisches Farbmittel.

Der Anteil der Hilfs- bzw. Zusatzstoffe im Granulat beträgt 0 bis 40 Gew.-%, vorzugsweise 1 bis 25 Gew.-%.

Eine weitere bevorzugte Ausführungsform betrifft die Verwendung des vorbeschriebenen Beschichtungsmittels, wobei das Granulat mit Wasser und gegebenenfalls mit Buntfasern und/oder metallischen Fasern und/oder metallischen Partikeln und/oder Perlmutt und/oder anorganischen und/oder organischen gefärbten Partikeln zur Erzielung bestimmter optischen Effekte zu einer steifen, breiig-pastösen Beschichtungsmasse mit einer Viskosität von 300 bis 90.000 mPas bei 20°C, vorzugsweise 1.100 bis 30.000 mPas bei 20°C verrührt wird.

Das Beschichtungsmittel wird aus Granulat mit Wasser gegebenenfalls unter Zusatz von konventionellen Hilfs- und/oder Zusatzstoffen vorgemischt und in Plastikbehältern aufbewahrt, oder direkt vor Ort zu einer steifen, breiig-pastösen Masse vermischt.

Nach einer weiteren bevorzugten Ausführungsform wird die steife, breiig-pastöse Beschichtungsmasse mit einem Spritzgerät in an sich bekannter Weise auf die zu beschichtende Wand- und/oder Deckenfläche aufgetragen, wobei die gewünschte Oberflächenstruktur durch die Körnung des Granulates eingestellt wird.

Nach einer weiteren bevorzugten Ausführungsform wird die steife, breiig-pastöse Beschichtungsmasse mit einem Spritzgerät, insbesondere einer handelsüblichen Trichterspritzpistole in an sich bekannter Weise, beispielsweise einem Zug, fugenlos und in beliebiger Schichtdicke aufgetragen, wobei die gewünschte Oberflächenstruktur durch die Körnung des Granulates eingestellt wird.

Nach einer weiteren bevorzugten Ausführungsform wird die Beschichtungsmasse mit herkömmlichen Techniken beispielsweise Kelle/Traufe auf die zu beschichtende Wand-und/oder Deckenfläche aufgetragen.

Von entscheidender Bedeutung ist, daß das cellulosische Granulat auch in fertigen Mischungen seine Konsistenz behält und nicht wie bei bekannten Beschichtungsmitteln in Fasern zerfällt. Versuche haben gezeigt, daß die breiig-pastöse Granulatmischung auch nach längeren Standzeiten ihre Konsistenz behält, d.h. sie bleibt stabil und unverändert.

Alternativ zum fertigen pastösen Beschichtungsmittel mit Granulat wird auch eine Trockenmischung des Beschichtungsmittels eingesetzt, die 5 bis 100 Gew.-%, vorzugsweise 20 bis 90 Gew.-% des Granulats und 0 bis 95 Gew.-%, vorzugsweise 10 bis 80 Gew.-% Hilfs- und/oder Zusatzstoffe enthält. Diese Trockenmischung wird in der Weise verwendet, dass diese-vor Ort nur noch im entsprechenden Verhältnis mit Wasser angerührt wird und dadurch das oben beschriebenen Beschichtungsmittel entsteht. Dies bedeutet eine Einsparung an Gewicht und Lagerungsraum. Außerdem kann der Anwender die Trockenmischung nach seinem Bedarf ansetzen.

Bei der Anfertigung des Beschichtungsmittels werden gegebenenfalls auch Buntfasern und/oder metallische Fasern und/oder metallische Partikel und/oder Perlmut und/oder anorganische und/oder organische gefärbte Partikel zugefügt, um bestimmte optische Effekte zu erreichen.

Das Beschichtungsmittel oder die Trockenmischung sind für Innen- und Außenanwendungen, insbesondere aber für Innenanwendungen geeignet.

Die gewonnene Oberflächenstruktur hebt sich deutlich von den bisherigen Beschichtungsmitteln für Wände und Decken auf Basis von Cellulosefasern ab. Das Material läßt sich sehr einfach verarbeiten und es entsteht eine ansprechende nahtlose Rauputzstruktur, die auf neutralen Untergründen ohne Grundierungsmittel aufgebracht werden kann.

Durch die gute Deckkraft und Lagenbindung kann die Beschichtungsmischung meist direkt beispielsweise auf bestehende Tapeten oder renovierungsbedürftige Oberflächen aufgebracht werden. Die Farbe und Struktur bleibt beständig, ist überstreichbar, strapazierbar, jederzeit reparabel und eignet sich auch für den Einsatz in Naßräumen. Die aufgebrachte Beschichtung trocknet im Gegensatz zu herkömmlichen Beschichtungen schnell und härtet gleichmäßig aus.

Nach einer weiteren bevorzugten Ausführungsform betrifft die Erfindung die Verwendung des vorbeschriebenen Beschichtungsmittels zur dekorativen Beschichtung, Veredelung und Strukturierung von Oberflächen im Innenbereich und / oder im Außenbereich.

Die vorliegende Erfindung wird nun durch Ausführungsbeispiele näher erläutert.

Die vorliegende Erfindung wird zunächst durch Figuren (Fig.) näher erläutert, wobei Muster gemäß Stand der Technik und nach der Erfindung, aufgebracht auf eine Wand, jeweils aus 100 cm, 50 cm und 25 cm Entfernung wiedergegeben werden.

Es zeigen:
Fig. 1 eine Oberflächenstruktur nach dem Stand der Technik gemäß nachstehendem Vergleichsbeispiel 1 (aufgenommen aus 1 m Entfernung).
Fig. 1a und 1b vergrößerte Ansichten der Struktur von Fig. 1, aufgenommen aus 50 cm und 25 cm Entfernung.
Fig. 2 eine erfindungsgemäße Oberflächenstruktur gemäß nachstehendem Beispiel 1.
Fig. 2a und 2b vergrößerte Ansichten der Struktur von Fig. 2.
Fig. 3 eine Oberflächenstruktur gemäß nachstehendem Beispiel 2.
Fig. 3a und 3b vergrößerte Ansichten der Struktur von Fig. 3.
Fig. 4 eine Oberflächenstruktur gemäß nachstehendem Beispiel 3.
Fig. 4a und 4b vergrößerte Ansichten der Struktur von Fig. 4.
Fig. 5 eine Oberflächenstruktur nach dem Stand der Technik gemäß nachstehendem Vergleichsbeispiel 2.
Fig. 5a und 5b vergrößerte Ansichten der Struktur von Fig. 5.
Fig. 6 eine Oberflächenstruktur nach dem Stand der Technik gemäß nachstehendem Vergleichsbeispiel 3.
Fig. 6a und 6b vergrößerte Ansichten der Struktur von Fig. 6.
Fig. 7 eine Oberflächenstruktur nach dem Stand der Technik gemäß nachstehendem Vergleichsbeispiel 4.
Fig. 7a und 7b vergrößerte Ansichten der Struktur von Fig. 7.

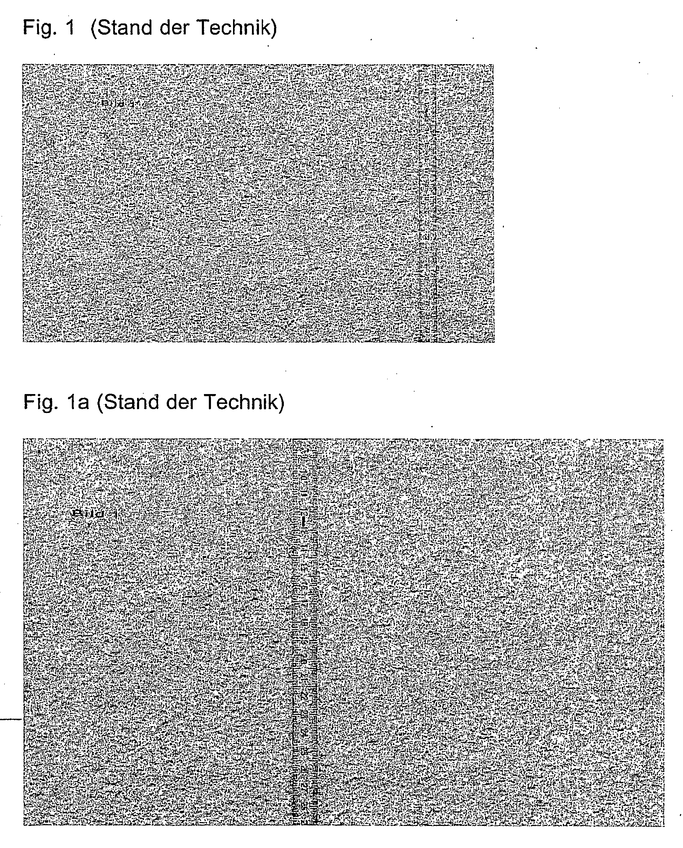

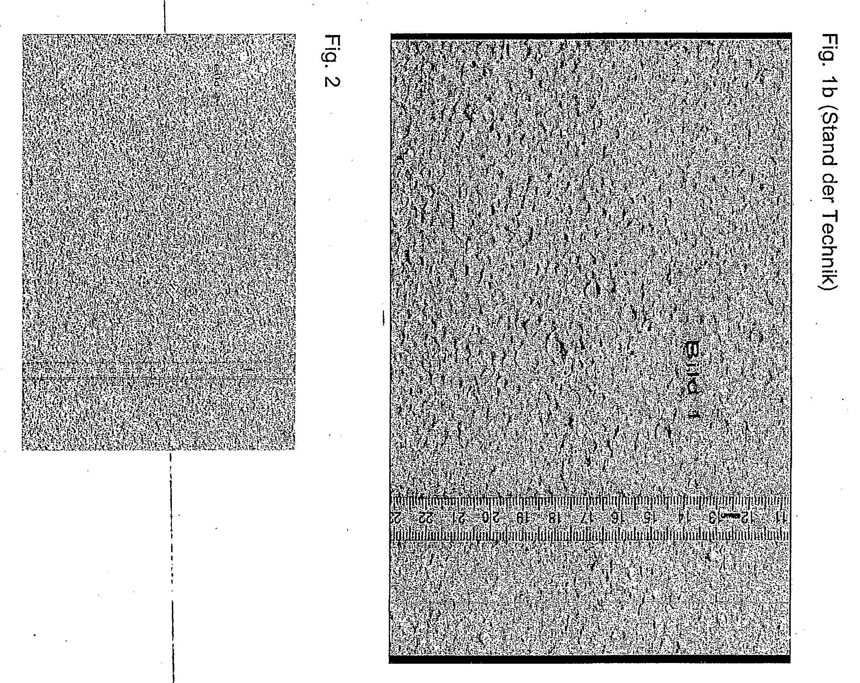

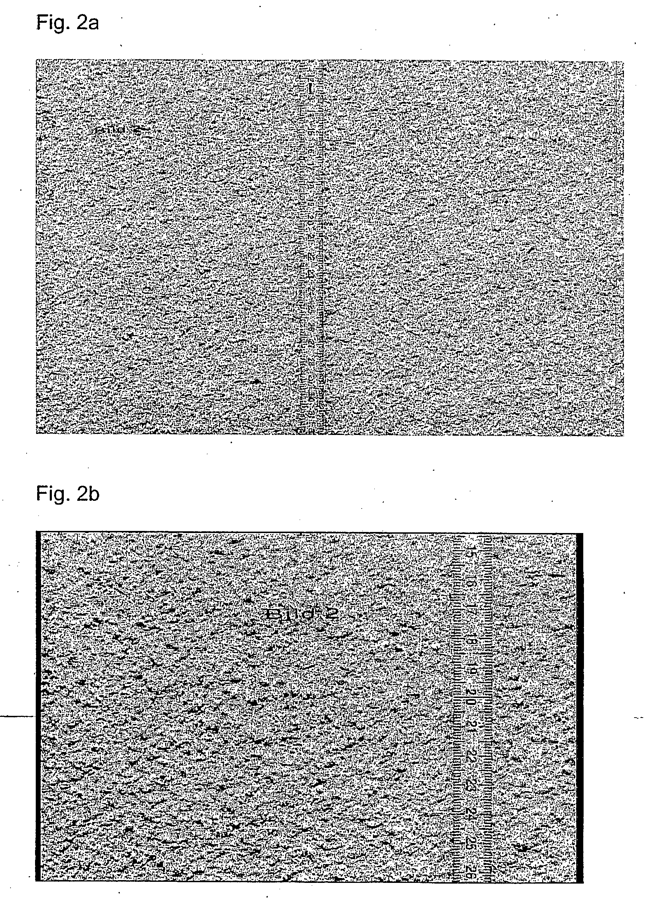

Wie man den erfindungsgemäßen Fig. 2, 2a und 2b entnehmen kann, erhält man mit Beschichtungsmitteln auf Basis von cellulosischen Granulaten völlig andere Oberflächenstrukturen als mit den bereits bekannten Beschichtungsmitteln gemäß Fig. 1, 1a, 1b und 5, 5a, 5b, 6, 6a, 6b, 7, 7a, 7b. Über die Korngrößenverteilung kann beliebig und auf sehr einfache Weise die Oberflächenstruktur einer Beschichtung verändern. Näheres in den folgenden Ausführungsbeispielen.

Die vorliegende Erfindung wird weiterhin durch nachfolgende Ausführungsbeispiele und Vergleichsbeispiele näher erläutert.

**Zur Charakterisierung** von Granulat, Granulatmischungen und Beschichtungsmasse sowie von Ausgangsstoffen und Vergleichsprodukten wurden folgende Meßmethoden angewandt:

### 1. Schüttgewicht

Die Probe wurde in einem 1000 ml Meßzylinder aufgefüllt und durch Wägung das Gewicht ermittelt.

### 2. Dichte

Die Bestimmung der Dichte erfolgte mit einem Helium Gaspyknometer (Pyknomatik 200 der Firma Porotec).

### 3. Siebschnitt

### a. Siebschnitt-Bestimmung von Materialien mit kurzen bzw. langen Fasern

Die Bestimmung des Siebschnittes von kurzfaserig und langfaserig Materialien erfolgte mit einem Alpine Luftstrahlsieb; Laufzeit eine Minute.

### b. Siebschnitt-Bestimmung von Granulaten und Granulatmischungen

Die Bestimmung des Siebschnittes von Granulaten und Granulatmischungen erfolgte mit der Analysen-Siebmaschine AS 200 basic der Firma Retsch und den Analysensiebe nach DIN ISO 3310/1, 200mm Durchmesser und 50mm Höhe.

### 4. Viskosität-Bestimmung

Die Viskosität (Konsistenz) der Beschichtungsmasse erfolgte bei 20 °C mit einem Rotationsviskosimeter der Firma Brookfield, Type RVT und den Spindel Nr. 6 bei 20 bzw. 50 U/min.

### Herstellung des Granulates

In einem 300 l Drais-Mischer werden 40 kg vorgemahlene Cellulose (Zellstoff), Type 402-2b, Fa. Mikrotechnik, und 3 l Wasser vorgelegt. Das Gemisch wird 20 min intensiv vermischt. Aus dem Gemisch werden mit einem PHARMAPAKTOR L200/50P, Fa. Hosokawa Bepex GmbH, versehen mit Wellprofilwalzen von 12mm, seitlich geschlossen, und einer zyl./konischen Schnecke, bei einer Anpresskraft von 130 bis 150 kN harte Schülpen hergestellt. Anschließend werden die Schülpen mit einer Siebmühle,Fa. Hosokawa Bepex GmbH, versehen mit einem Sieb der Maschenweite von 3mm gemahlen und das Mahlgut mit einer Vibrationssiebmaschine, Fa. Hosokawa Bepex GmbH, versehen mit einem Siebeinsatz der Maschenweite von 2mm gesiebt.

### Vergleichsbeispiel 1

Zu 2 l (256g) vorgemahlener Cellulose (Zellstoff), Type 402-2b, Fa. Mikro-Technik, werden 1 l (1550g) Acrylfasaden-Farbe und 1,5 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 1 und Fig. 1a).

Die Viskosität der Beschichtungsmasse beträgt 3100 mPas.

Die vorgemahlene Cellulose weist eine Korngrößenverteilung (mit Alpine Luftstrahlsieb) von

| | |
|---|---|
| 57,7 | Gew.-% > 40µm |
| 34,7 | Gew.-% > 50µm |
| 11,4 | Gew.-% > 63µm |
| 3,3 | Gew.% > 90µm |
| 0,0 | Gew.-% >100µm |

auf.

Das Schüttgewicht der gemahlenen Cellulose beträgt 128 g/l und die Feuchtigkeit 2,4%.

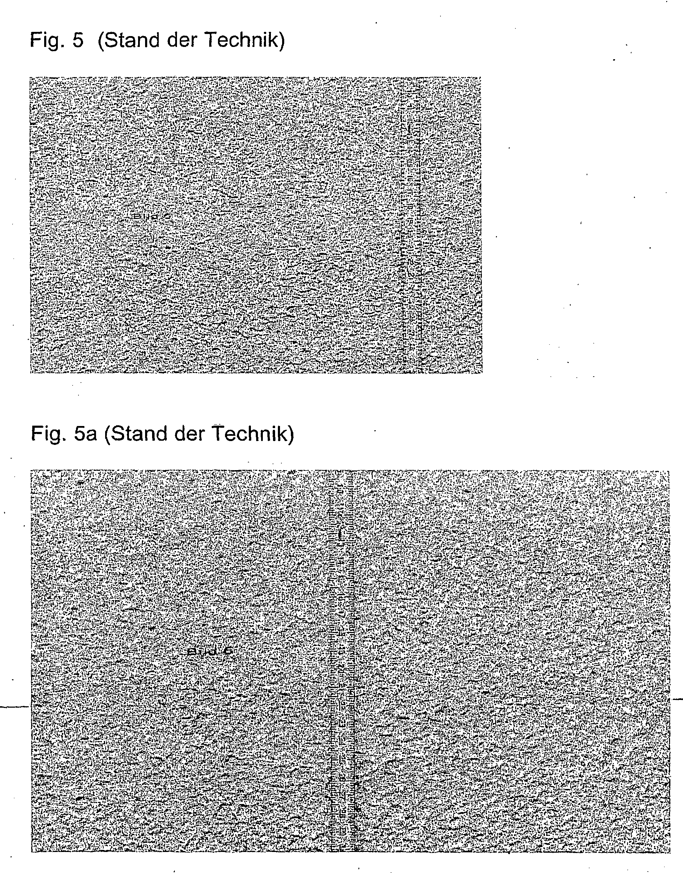

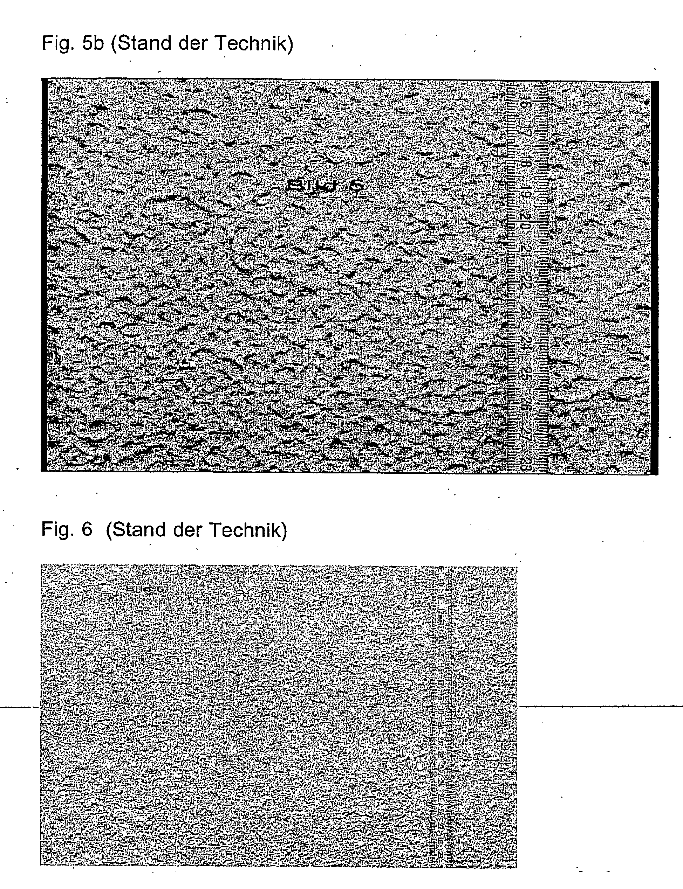

Aus dem **Fig. 1 und 1a** geht eindeutig hervor, daß die Oberflächenstruktur der Beschichtung mit cellulosen Fasern von der Oberflächenstruktur von Beschichtungen mit cellulosischen Granulaten (vergleiche **Fig. 2****,** **Fig. 2a****,** **Fig. 3, Fig. 3a****,** **Fig. 4** **und** **Fig. 4a****)** völlig unterschiedlich ist. Die Oberflächenstruktur der Beschichtung ist mit der Oberflächenstrukturen von Beschichtungen mit handelsüblichen Beschichtungsmitteln (vergleiche **Fig. 5, Fig. 5a****,** **Fig. 6****,** **Fig. 6a****,** **Fig. 7 und Fig. 7a****)** vergleichbar. Die Oberflächenstruktur entsteht in diesen Fall hauptsächlich durch das Zerplatzen von Lufteinschlüssen. Mit Beschichtungsmitteln auf Basis cellulosischer Fasern kann man die Oberflächenstruktur nur sehr begrenzt variieren.

### Beispiel 1

Zu 2 l (704g) aufgemahlenem und nicht gesiebtem Granulat werden 1 l (1550g) Acrylfasaden-Farbe und 1,8 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1 - 6 bar) mit einer 4 - 8 mm Düsenscheibe auf eine Wand aufgespritzt wird (Fig. 2, Fig.2a, Fig. 2b).

Die Viskosität der Beschichtungsmasse beträgt 5400 mPas.

Das aufgemahlene und nicht gesiebte Granulat weist die Korngrößenverteilung (mit Analyse-Siebmaschine 200 basic) von

| | | |
|---|---|---|
| 2,5 | Gew.-% | < 100µm |
| 18,8 | Gew.-% | 100 - 250µm |
| 7,5 | Gew.-% | 250- 400µm |
| 11,9 | Gew.-% | 400 - 600µm |
| 12,5 | Gew.-% | 600 - 800 µm |
| 27,1 | Gew.-% | 800 -1250µm |
| 19,7 | Gew.-% | > 1250µm |

auf.

Das Schüttgewicht des aufgemahlenen und nicht gesiebten Granulates beträgt 352 g/l und die Feuchtigkeit 5,7%.

### Beispiel 2 (nicht erfindungsgemäß)

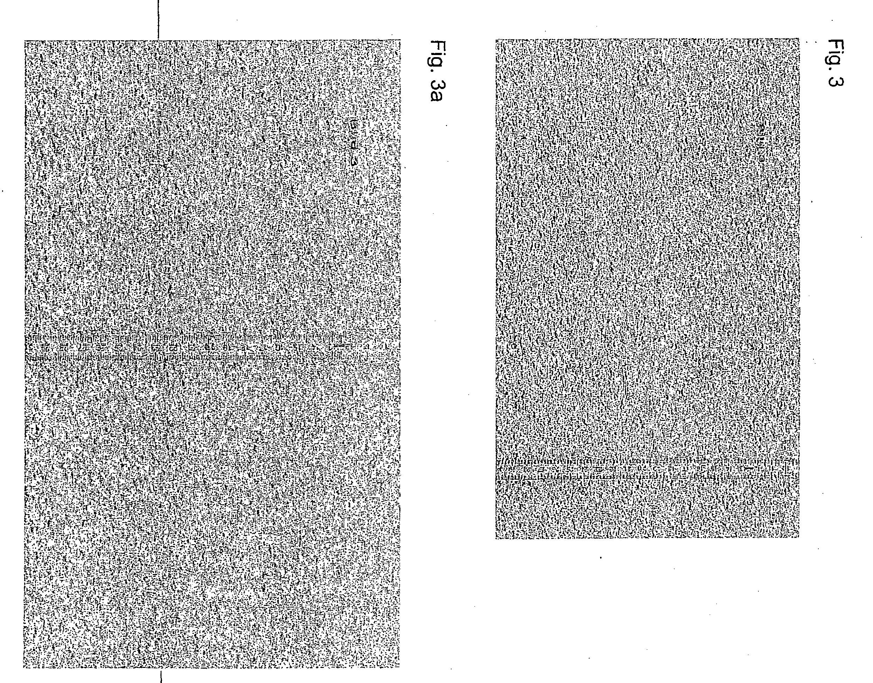

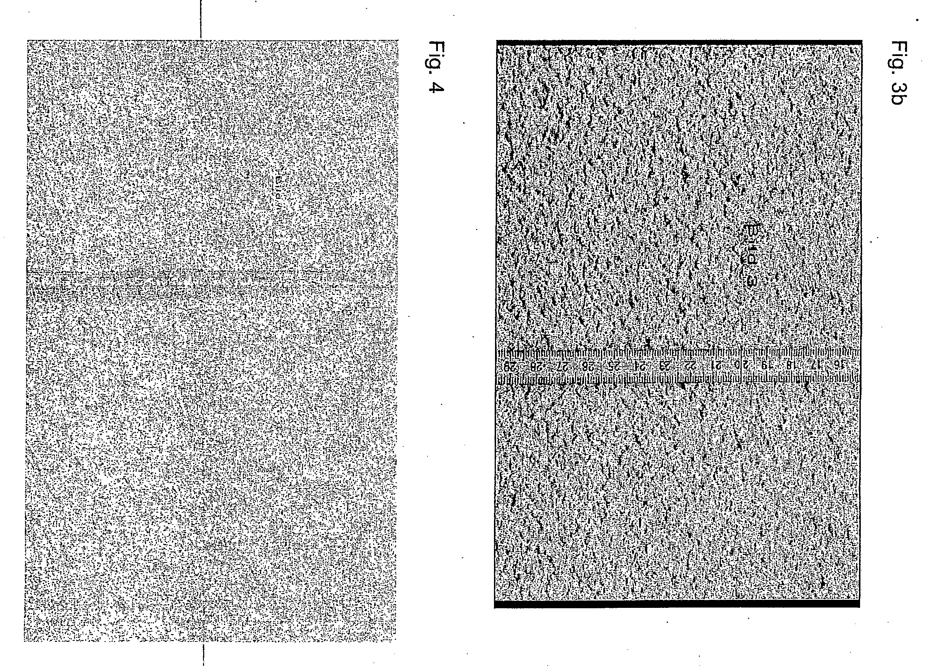

Zu 2 l (652g) gesiebtem Granulat werden 1 l (1550g) Acrylfasaden-Farbe und 1,8 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 3, Fig. 3a, Fig. 3b).

Die Viskosität der Beschichtung beträgt 2500 mPas.

Das gesiebte Granulat weist die Korngrößenverteilung (mit Analysen-Siebmaschine 200 basic) von

| | | |
|---|---|---|
| 6,1 | Gew.-% | < 100µm |
| 4,3 | Gew.-% | 100 - 250µm |
| 6,2 | Gew.-% | 250 - 400µm |
| 14,0 | Gew.-% | 400 - 600µm |
| 14,5 | Gew.-% | 600 - 800 µm |
| 43,1 | Gew.-% | 800 - 1250µm |
| 12,0 | Gew.-% | > 1250µm |

auf.

Das Schüttgewicht des gesiebten Granulates beträgt 326 g/l und die Feuchtigkeit 5,9%.

### Beispiel 3 (nicht erfindungsgemäß)

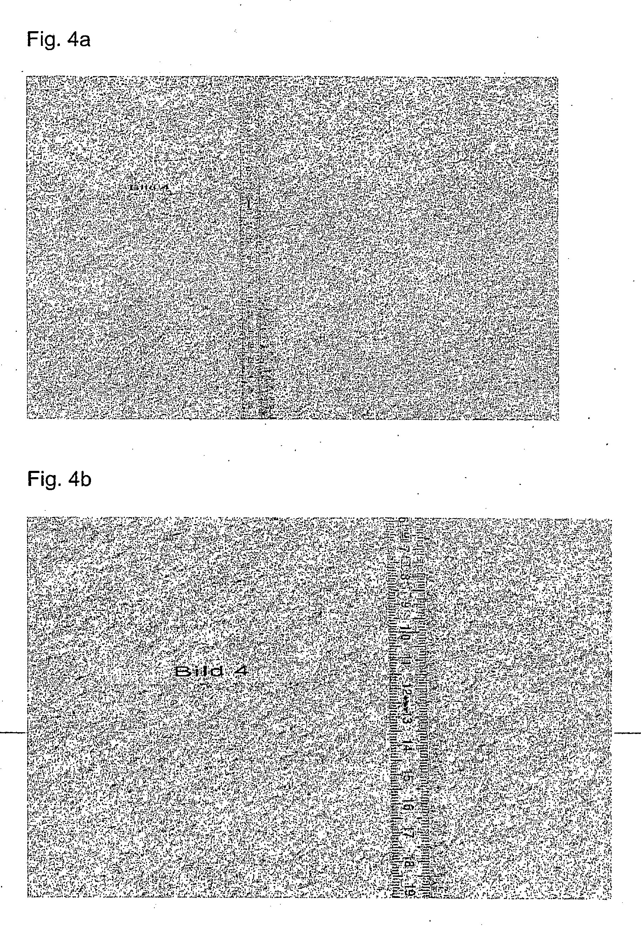

Zu 2 l (930g) grobem Granulat werden 1 l (1550g) Acrylfasaden-Farbe und 1,6 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 4, Fig. 4a, Fig. 4b).

Die Viskosität der Beschichtungsmasse beträgt 2800 mPas.

Das grobe Granulat weist eine Korngrößenverteilung (mit Analysen-Siebmaschinen 200 basic) von

| | | |
|---|---|---|
| 0,4 | Gew.-% | < 800µm |
| 9,6 | Gew.-% | 800 - 1250µm |
| 67,5 | Gew.-% | 1250 - 1600µm |
| 22,2 | Gew.-% | 1600 - 2000µm |
| 0,4 | Gew.-% | > 2000µm |

auf.

Das Schüttgewicht des groben Granulates beträgt 465 g/l und die Feuchtigkeit 6,3%.

### Vergleichsbeispiel 2

Zu 2 l (780g) Faserit werden 2 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 5, Fig. 5a, Fig. 5b).

Die Viskosität der Beschichtungsmasse beträgt 4500 mPas.

Das Faserit weis eine Korngrößenverteilung (mit Alpine Luftstrahlsieb) von

| | |
|---|---|
| 27,2 | Gew.-% > 40µm |
| 18,0 | Gew.-% > 50µm |
| 13,6 | Gew.-% > 63µm |
| 12,4 | Gew.-% > 90µm |
| 10,0 | Gew.-% >100µm |

auf.

Das Schüttgewicht des Faserits beträgt 390 g/l und die Feuchtigkeit 1,9%.

### Vergleichsbeispiel 3

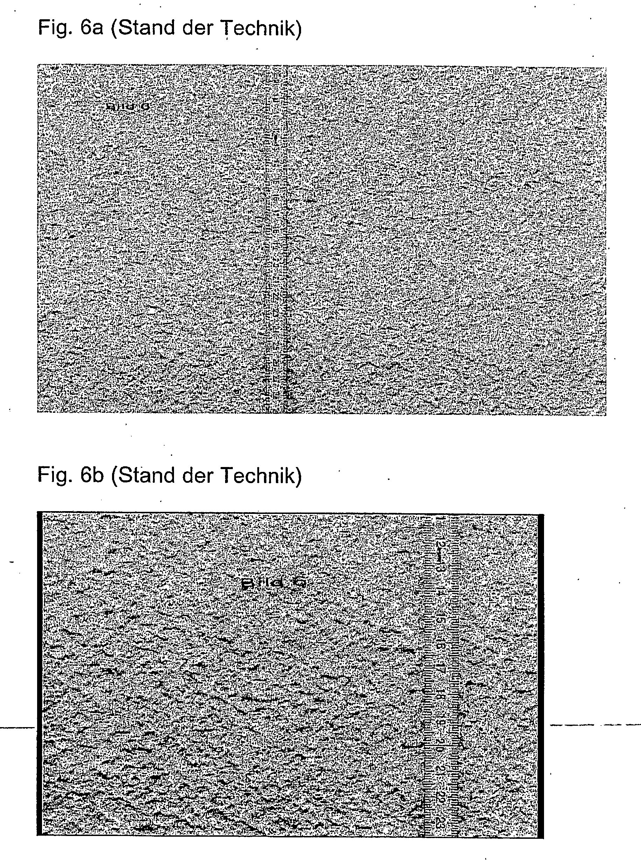

Zu 2 l (146g) Nature-Floc^{R} Atlanta werden 2 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 6, Fig. 6a, Fig. 6b).

Die Viskosität der Beschichtungsmasse beträgt 4800 mPas.

Nature-Floc^{R} Atlanta weis eine Korngrößenverteilung (mit Alpine Luftstrahlsieb) von

| | |
|---|---|
| 80,0 | Gew.-% > 40µm |
| 68,6 | Gew.-% > 50µm |
| 56,6 | Gew.-% > 63µm |
| 45,4 | Gew.-% > 90µm |
| 34,8 | Gew-% >100µm |

auf.

Das Schüttgewicht von Nature-Floc^{R} Atlanta beträgt 73 g/l und die Feuchtigkeit 5,2%.

### Vergleichsbeispiel 4

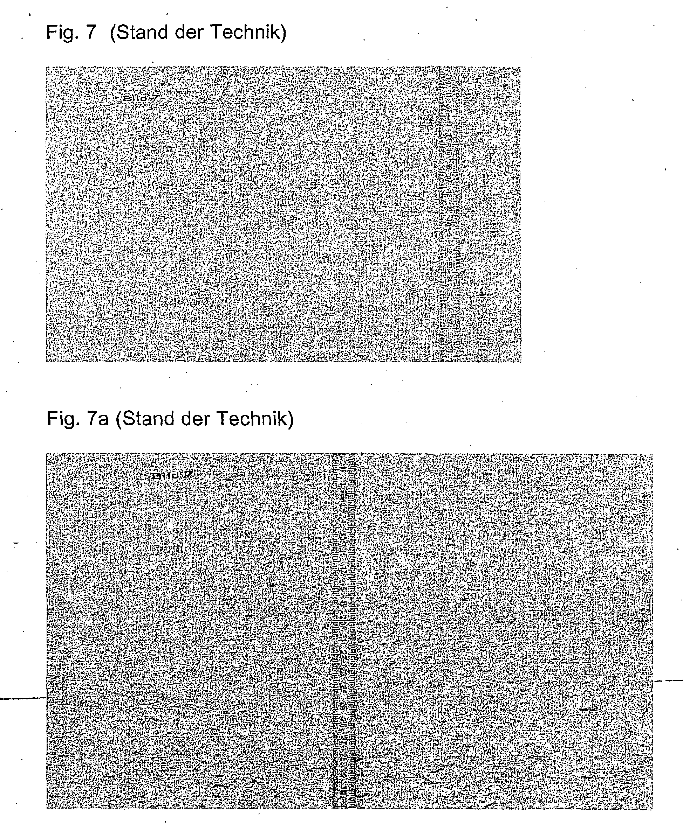

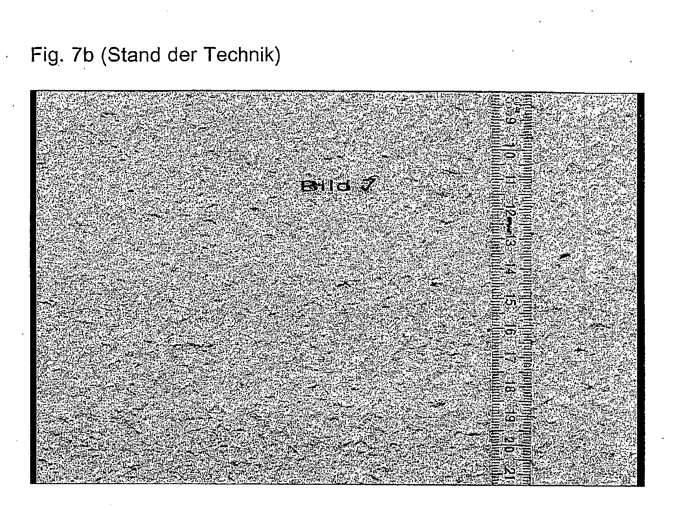

Zu 2 l (296g) Nature-Floc^{R} California werden 2 l Wasser zugesetzt. Anschließend wird das Gemisch mit einem Rührer gut vermischt. Es entsteht eine pastöse, spritzfähige Masse, die mit einer handelsüblichen Trichterpistole unter Verwendung von Luftdruck (1-6 bar) mit einer 4 - 8 mm Düsenscheibe auf eine Wand aufgespritzt wird (Fig. 7, Fig. 7a, 7b).

Die Viskosität der Beschichtungsmasse beträgt 6600 mPas.

Nature-Floc^{R} California weis die Korngrößenverteilung (mit Alpine Luftstrahlsieb) von

| | |
|---|---|
| 78,2 | Gew.-% > 40µm |
| 70,8 | Gew.-% > 50µm |
| 65,0 | Gew.-% > 63µm |
| 59,0 | Gew.-% > 90µm |
| 54,6 | Gew.-% > 100µm |

auf.

Das Schüttgewicht von Nature-Floc^{R} California beträgt 148 g/l und die Feuchtigkeit 3,3%.

### Beispiel 4 (nicht erfindungsgemäß)

Aus einer Mischung von

| | |
|---|---|
| 9,0 l | gesiebtes Granulat (wie Beispiel 2) |
| 12,5 l | Farbe Caparol Malerit ELF |
| 8,0 l | Wasser |

wird analog Beispiel 1 eine pastöse, spritzfähige Masse hergestellt.

### Beispiel 5 (nicht erfindungsgemäß)

Aus einer Mischung von

| | |
|---|---|
| 15,0 l | gesiebtes Granulat (wie Beispiel 2) |
| 12,5 l | Farbe Caparol Malerit ELF |
| 10,0 l | Wasser |
| 300 g | Carboxymethylcellulose |

wird Analog Beispiel 1 eine pastöse, spritzfähige Masse herstellt.

### Beispiel 6 (nicht erfindungsgemäß)

Aus einer Mischung von

| | |
|---|---|
| 5,0 l | gesiebtes Granulat (wie Beispiel 2) |
| 5,0 l | Celulosefasern, Type 402-2b (wie Beispiel 1) |
| 12,5 l | Farbe Caparol Malerit ELF |
| 250 g | Carboxymethylcellulose |

wird analog Beispiel 1 eine pastöse, spritzfähige Masse hergestellt.

### Beispiel 7

Aus einer Mischung von

| | |
|---|---|
| 8,0 l | nicht gesiebtes Granulat(wie Beispiel 1) |
| 2,0 l | Marmormehl |
| 12,5 l | Farbe Caparol Malerit ELF |
| 15,0 l | Wasser |
| 300 g | Carboxymethylcellulose |

wird analog Beispiel 1 eine pastöse, spritzfähige Masse hergestellt.

### Beispiel 8 (nicht erfindungsgemäß)

Aus einer Mischung von

| | |
|---|---|
| 5,0 l | grobes Granulat (wie Beispiel 3) |
| 7,0 kg | Trockenfarbe Caparol Malerit ELF |
| 10,0 l | Wasser |
| 250 g | Carboxymethylcellulose |

wird analog Beispiel 1 eine pastöse, spritzfähige Masse hergestellt.

## Patentansprüche

1. Spritzfähiges Beschichtungsmittel hergestellt mit einem Granulat, wobei das Granulat mit Wasser und gegebenenfalls mit konventionellen Hilfs- und/oder Zusatzstoffen zu einer steifen, breiig-pastösen Beschichtungsmasse mit einer Viskosität von 300 bis 80.000 mPas bei 20°C, verrührt wird und diese Beschichtungsmasse
5 bis 40 Gew.-% Granulat, bis 60 Gew.-% Wasser und 0 bis 95 Gew.-% Hilfs-und/oder Zusatzstoffe enthält, wobei das Granulat Cellulose und/oder regenerierte Cellulose und/oder cellulosische Rohstoffe sowie ihre Mischungen mit synthetischen Fasern und/oder anorganischen Fasern und/oder anorganischen grobkörnigen, feinkörnigen oder pulverförmigen Stoffen und/oder organischen Polymermaterialien und/oder Hilfs- bzw. Zusatzstoffen enthält, wobei die Ausgangsstoffe und/oder ihre Mischungen zu einem Pressling gepresst, gemahlen und gegebenenfalls gesiebt werden, wobei das Granulat die Dichte von 1 bis 5 g/cm3 aufweist, wobei das Granulat eine Feuchtigkeit von 1 bis 20 Gew.-% aufweist, wobei
das Granulat ein Schüttgewicht von 150 bis 1500 g/l aufweist und das gemahlene und gegebenenfalls gesiebte Granulat die Korngrößenverteilung von
0-40,7 Gew.-% 0 - 600µm
5 -55 Gew.-% 600 -1250µm
5 -95 Gew.-% > 1250µm
oder
0 -15 Gew.-% 0 - 800 µm
10 -85 Gew.-% 800 -2000µm.
0-15 Gew.-% > 2000µm
oder
0,2 - 5 Gew.-% < 100µm
1 - 15 Gew.-% 100 - 250µm
4 - 25 Gew.-% 250 - 400µm
8 - 30 Gew.-% 400 - 600µm
10 - 35 Gew.-% 600 - 800µm
15 - 40 Gew.-% 800 -1250µm
7 - 20 Gew.-% > 1250pµm
oder
5 - 10 Gew.-% < 800µm
10 - 50 Gew.-% 800 - 1250µm
25 - 70 Gew.-% 1250 - 1600µm
7 - 15 Gew.-% 1600 - 2000µm 3 - 5 Gew.-% > 2000µm
aufweist.

2. Beschichtungsmittel nach Anspruch 1, **dadurch gekennzeichnet, daß** die Dichte des Granulates vorzugsweise 1,2 bis 3,1 g/cm³ beträgt.

3. Beschichtungsmittel nach Anspruch 1, **dadurch gekennzeichnet, daß** die Feuchtigkeit des Granulates vorzugsweise 2 bis 12% Gew.-% beträgt.

4. Beschichtungsmittel nach Anspruch 1, **dadurch gekennzeichnet, daß** das Schüttgewicht des Granulates vorzugsweise 170 bis 600 g/l beträgt.

5. Beschichtungsmittel nach Anspruch 1, **dadurch gekennzeichnet, daß** die Cellulose ausgewählt ist aus der Gruppe bestehend aus Baumwolle, Linters, Zellstoff, Papier, Flachs, Hanf, Jute, Kupferseide, Rayon, Lyocel, und/oder Buntfasern.

6. Beschichtungsmittel nach Anspruch 1 bis 4, **dadurch gekennzeichnet, daß** der cellulosische Rohstoff Holz, Holzspäne, Sägemehl, Stroh, und/oder Kork ist.

7. Beschichtungsmittel nach Anspruch 1 bis 4, **dadurch gekennzeichnet, daß** die synthetischen Fasern, Polyester-, Polyamid-, Polyacrylnitril-, Polyurethan-, Polyethylen-, Polypropylen- und/oder Acetatfasern sind.

8. Beschichtungsmittel nach Anspruch 1 bis 4, **dadurch gekennzeichnet, daß** die anorganischen Fasern Silikat-, Wasserglas-, Glas-, Metall-, und/oder Kohlenstofffasern sind.

9. Beschichtungsmittel nach Anspruch 1 bis 4, **dadurch gekennzeichnet, daß** der cellulosische Anteil im Granulat 40 bis 100 Gew.-%, vorzugsweise 60 bis 95 Gew.-% beträgt.

10. Beschichtungsmittel nach Anspruch 1 bis 4 oder 7, **dadurch gekennzeichnet, daß** der Anteil der synthetischen Fasern im Granulat 0 bis 60 Gew.-%, vorzugsweise 5 bis 30 Gew.-% beträgt.

11. Beschichtungsmittel nach Anspruch 1 bis 4 oder 8, **dadurch gekennzeichnet, daß** der Anteil der anorganischen Fasern im Granulat 0 bis 60 Gew.-% vorzugsweise 5 bis 30 Gew.-% beträgt.

12. Beschichtungsmittel nach Anspruch 1 bis 4, 8 oder 11, **dadurch gekennzeichnet, daß** die anorganischen grobkörnigen, feinkörnigen oder pulverförmigen Stoffe Marmor, Quarzsand, Kieselsäure, Kreide, Gips, Carbonate, und/oder Metalloxide sind.

13. Beschichtungsmittel nach Anspruch 1 bis 4, 8 oder 11, **dadurch gekennzeichnet, daß** der Anteil der anorganischen grobkörnigen, feinkörnigen oder pulverförmigen Stoffe im Granulat 0 bis 40 Gew.-%, vorzugsweise 5 bis 25 Gew.-% beträgt.

14. Beschichtungsmittel nach Anspruch 1 bis 4 oder 8, **dadurch gekennzeichnet, daß** die organischen Polymermaterialien Polyethylen, Polypropylen, Polytetrafluorethylen, Polystyrolschaum, Acrylate, Gummi, und/oder andere modifizierte oder unmodifizierte Polysaccharide sind.

15. Beschichtungsmittel nach Anspruch 14, **dadurch gekennzeichnet, daß** der Anteil der organischen Polymermaterialien im Granulat 0 bis 40 Gew.-%, vorzugsweise 5 bis 25 Gew.-% beträgt.

16. Beschichtungsmittel nach Anspruch 1 bis 15, **dadurch gekennzeichnet, daß** das Granulat die üblichen Hilfs- und Zusatzstoffe in Mengen von 0 bis 40 Gew.-%, vorzugsweise von 1 bis 25 Gew.-% enthält.

17. Beschichtungsmittel nach Anspruch 1, **dadurch gekennzeichnet, daß** der Zusatzstoff ein weißes oder buntes organisches oder anorganisches Farbmittel ist.

18. Herstellung des Beschichtungsmittels nach Anspruch 1 bis 17, **dadurch gekennzeichnet, daß** das Granulat mit Wasser und gegebenenfalls mit Buntfasern und/oder metallischen Fasern und/oder metallischen Partikeln und/oder Perlmutt und/oder anorganischen und/oder organischen gefärbten Partikeln zur Erzielung bestimmter optischen Effekte zu einer steifen, breiig-pastösen Beschichtungsmasse mit einer Viskosität von 300 bis 90.000 mPas bei 20°C, vorzugsweise 1.100 bis 30.000 mPas bei 20°C verrührt wird.

19. Verwendung des Beschichtungsmittels nach Anspruch 1 bis 17, **dadurch gekennzeichnet, daß** die steife, breiig-pastöse Beschichtungsmasse mit einem Spritzgerät in an sich bekannter Weise auf die zu beschichtende Wand- und/oder Deckenfläche aufgetragen wird, wobei die gewünschte Oberflächenstruktur durch die Körnung des Granulates eingestellt wird.

20. Verwendung des Beschichtungsmittels nach Anspruch 1 bis 17, **dadurch gekennzeichnet, daß** die steife, breiig-pastöse Beschichtungsmasse mit herkömmlichen Techniken beispielsweise Kelle/Traufe auf die zu beschichtende Wand- und/oder Deckenfläche aufgetragen wird.

21. Verwendung des Beschichtungsmittels nach Anspruch 1 bis 17 zur dekorativen Beschichtung, Veredelung und Strukturierung von Oberflächen im Innenbereich und / oder im Außenbereich.

22. Trockenmischung des Beschichtungsmittels nach Anspruch 1 bis 17, enthaltend 5 bis 100 Gew.-%, vorzugweise 20 bis 90 Gew.-% Granulat und 0 bis 95 Gew.-%, vorzugsweise 10 bis 80 Gew.-% Hilfs- und/oder Zusatzstoffe.

23. Verwendung der Trockenmischung nach Anspruch 22, durch Verrühren mit Wasser zu einer steifen, breiig-pastösen Beschichtungsmasse und Auftragen auf die zu beschichtende Wand- und/oder Deckenfläche.

## Claims

1. Sprayable coating agent prepared with a granulate, wherein the granulate is mixed with water and, optionally, with conventional auxiliary agents and/or additives to form a stiff, pasty slurry having a viscosity of from 300 to 80,000 mPa·s at 20°C, wherein this slurry contains between 5 and 40 wt% of granulate, up to 60 wt% of water, and between 0 and 95 wt% of auxiliary agents and/or additives, wherein the granulate contains cellulose and/or regenerated cellulose and/or cellulosic raw materials as well as their blends with synthetic fibres and/or inorganic fibres and/or inorganic coarse-grain, fine-grain or powdered substances and/or organic polymeric materials and/or auxiliary agents and additives, wherein the source materials and/or mixtures thereof are pressed into a pellet, ground and optionally sieved, wherein the granulate exhibits a density of between 1 and 5 g/cm³, wherein the granulate exhibits a moisture content of between 1 and 20 wt%, wherein the granulate has a bulk density of from 150 to 1,500 g/l and the ground and optionally sieved granulate exhibits grain size distribution of
0 to 40.7 wt% between 0 and 600 µm
5 to 55 wt% between 600 and 1,250 µm
5 to 95 wt% above 1,250 µm
or
0 to 15 wt% between 0 and 800 µm
10 to 85 wt% between 800 and 2,000 µm 0 to 15 wt% above 2,000 µm
or
0.2 to 5 wt% below 100 µm
1 to 15 wt% between 100 and 250 µm
4 to 25 wt% between 250 and 400 µm
8 to 30 wt% between 400 and 600 µm
10 to 35 wt% between 600 and 800 µm
15 to 40 wt% between 800 and 1,250 µm 7 to 20 wt% above 1,250 µm
or
5 to 10 wt% below 800 µm
10 to 50 wt% between 800 and 1,250 µm
25 to 70 wt% between 1,250 and 1,600 µm
7 to 15 wt% between 1,600 and 2,000 µm
3 to 5 wt% above 2,000 µm.

2. Coating agent according to claim 1, **characterized in that** the density of the granulate is preferably between 1.2 and 3.1 g/cm³.

3. Coating agent according to claim 1, **characterized in that** the moisture of the granulate is preferably between 2 and 12 wt%.

4. Coating agent according to claim 1, **characterized in that** the bulk density of the granulate is preferably between 170 and 600 g/l.

5. Coating agent according to claim 1, **characterized in that** the cellulose is selected from the group consisting of cotton, linters, pulp, paper, flax, hemp, jute, cuprammonium rayon, rayon, Lyocell and/or dyed fibres.

6. Coating agent according to claim 1 to 4, **characterized in that** the cellulosic raw material is wood, wood chips, sawdust, straw and/or cork.

7. Coating agent according to claim 1 to 4, **characterized in that** the synthetic fibres are polyester, polyamide, polyacrylonitrile, polyurethane, polyethylene, polypropylene and/or acetate fibres.

8. Coating agent according to claim 1 to 4, **characterized in that** the inorganic fibres are silicate, water glass, glass, metal and/or carbon fibres.

9. Coating agent according to claim 1 to 4, **characterized in that** the cellulose content in the granulate is between 40 and 100 wt% and preferably 60 to 95 wt%.

10. Coating agent according to claim 1 to 4 or 7, **characterized in that** the proportion of synthetic fibres in the granulate is between 0 and 60 wt% and preferably 5 to 30 wt%.

11. Coating agent according to claim 1 to 4 or 8, **characterized in that** the proportion of inorganic fibres in the granulate is between 0 and 60 wt% and preferably 5 to 30 wt%.

12. Coating agent according to claim 1 to 4, 8 or 11, **characterized in that** the inorganic coarse-grain, fine-grain or powdered substances are marble, quartz sand, silicic acid, chalk, gypsum, carbonates, and/or metal oxides.

13. Coating agent according to claim 1 to 4, 8 or 11, **characterized in that** the proportion of inorganic coarse-grain, fine-grain or powdered materials in the granulate is between 0 and 40 wt% and preferably 5 to 25 wt%.

14. Coating agent according to claim 1 to 4 or 8, **characterized in that** the organic polymeric materials are polyethylene, polypropylene, polytetrafluoroethylene, expanded polystyrene, acrylates, rubber and/or other modified or non-modified polysaccharides.

15. Coating agent according to claim 14, **characterized in that** the proportion of organic polymeric materials in the granulate is between 0 and 40 wt% and preferably 5 to 25 wt%.

16. Coating agent according to claim 1 to 15, **characterized in that** the granulate contains the usual auxiliary agents and additives in quantities of from 0 and 40 wt% and preferably 1 to 25 wt%.

17. Coating agent according to claim 1, **characterized in that** the additive is a white or coloured, organic or inorganic pigment.

18. Preparation of the coating agent according to claim 1 to 17, **characterized in that** the granulate is mixed with water and optionally with coloured fibres and/or metallic fibres and/or metallic particles and/or mother-of-pearl and/or dyed inorganic and/or organic particles to achieve certain visual effects to form a stiff, pasty slurry having a viscosity of between 300 and 90,000 mPa·s at 20°C and preferably 1,100 to 30,000 mPa·s at 20°C.

19. Use of the coating agent according to claim 1 to 17, **characterized in that** the stiff, pasty slurry is applied with a spray gun in a conventional manner to the wall and/or ceiling surface to be coated, wherein the desired surface texture is determined by the grain size of the granulate.

20. Use of the coating agent according to claim 1 to 17, **characterized in that** the stiff, pasty slurry is applied by conventional techniques, for example a trowel, to the wall and/or ceiling surface to be coated.

21. Use of the coating agent according to claim 1 to 17 for decorative coating, finishing and texturing surfaces indoors and/or outdoors.

22. Dry mixture of the coating agent according to claim 1 to 17, containing between 5 and 100 wt% and preferably 20 to 90 wt% of the granulate and between 0 and 95 wt% and preferably 10 to 80 wt% of the auxiliary agents and/or additives.

23. Use of the dry mixture according to claim 22 by stirring with water to form a stiff, pasty slurry and applying it to the wall and/or ceiling surface to be coated.

## Revendications

1. Agent de revêtement à projeter fabriqué à partir de granulés, cependant que les granulés sont mélangés avec de l'eau et, le cas échéant, avec des produits auxiliaires et/ou additifs conventionnels pour donner une masse de revêtement pâteuse et rigide dotée d'une viscosité entre 300 et 80 000 mPa·s à 20 °C et que cette masse de revêtement contient 5 à 40 % en poids de granulés, jusqu'à 60 % en poids d'eau et 0 à 95 % en poids de produits auxiliaires et/ou additifs, cependant que les granulés contiennent de la cellulose et/ou de la celluloserégénérée et/ou des matières premières cellulosiques ainsi queces matières mélangéesà des fibres synthétiques et/ou des fibres inorganiques et/ou des matières inorganiques à grains gros ou fins ou sous forme de poudreet/ou desmatières polymères organiques et/ou des produits auxiliaires et/ou des additifs,cependant que les matières de base et/ou leurs mélanges sont pressés pour former un comprimé, sont moulus et, le cas échéant, tamisés, cependant que les granulés présentent une densité de 1 à 5 g/cm³, cependant que les granulés présentent un taux d'humidité de 1 à 20 % en poids,cependant que les granulés présentent une masse volumique apparente de 150 à 1 500 g/l et que les granulés moulus et, le cas échéant, tamisés présentent une distribution granulométrique de
0 à 40,7 % en poids entre 0 et 600 µm,
5 à 55 % en poidsentre 600 et 1 250 µm et
5 à 95 % en poids supérieurs à 1 250 µm
ou
0 à 15 % en poids entre 0 et 800 µm,
10 à 85 % en poids entre 800 et 2 000 µm et
0 à 15 % en poids supérieurs à 2 000 µm
ou
0,2 à 5 % en poids inférieurs à 100 µm,
1 à 15 % en poids entre 100 et 250 µm,
4 à 25 % en poids entre 250 et 400 µm,
8 à 30 % en poids entre 400 et 600 µm,
10 à 35 % en poids entre 600 et 800 µm,
15 à 40 % en poids entre 800 et 1 250 µm et 7 à 20 % en poids supérieurs à 1 250 µm
ou
5 à 10 % en poids inférieurs à 800 µm,
10 à 50 % en poids entre 800 et 1 250 µm,
25 à 70 % en poids entre 1 250 et 1 600 µm,
7 à 15 % en poids entre 1 600 et 2 000 µm et
3 à 5 % en poids supérieurs à 2 000 µm.

2. Agent de revêtement selon la revendication 1, **caractérisé en ce que** la densité des granulésse situe de préférence entre 1,2 et 3,1 g/cm³.

3. Agent de revêtement selon la revendication 1, **caractérisé en ce que** le taux d'humidité des granulés se situe de préférence entre 2 et 12 % en poids.

4. Agent de revêtement selon la revendication 1, **caractérisé en ce que** la masse volumique apparente des granulés se situe de préférence entre 170 et 600 g/l.

5. Agent de revêtement selon la revendication 1, **caractérisé en ce que** la cellulose sélectionnée fait partie du groupe coton, linters, pâte à papier, papier, lin, hampe, jute, cupro, rayonne, Lyocell et/ou fibres teintes.

6. Agent de revêtement selon la revendication 1 à 4, **caractérisé en ce que** la matière première cellulosique est du bois, des copeaux de bois, de la sciure de bois, de la paille et/ou du liège.

7. Agent de revêtement selon la revendication 1 à 4, **caractérisé en ce que** les fibres synthétiques sont en polyester, polyamide, polyacrylonitrile, polyuréthane, polyéthylène, polypropylène et/ou acétate.

8. Agent de revêtement selon la revendication 1 à 4, **caractérisé en ce que** les fibres inorganiques sont ensilicate, verre soluble, verre, métal et/ou carbone.

9. Agent de revêtement selon la revendication 1 à 4, **caractérisé en ce que** la part de cellulose dans les granulés est de 40 à 100 % en poids, de préférence entre 60 et 95 % en poids.

10. Agent de revêtement selon la revendication 1 à 4 ou 7, **caractérisé en ce que** la part de fibres synthétiques dans les granulés est de 0 à 60 % en poids, de préférence entre 5 et 30 % en poids.

11. Agent de revêtement selon la revendication 1 à 4 ou 8, **caractérisé en ce que** la part de fibres inorganiques dans les granulés est de 0 à 60 % en poids, de préférence entre 5 et 30 % en poids.

12. Agent de revêtement selon la revendication 1 à 4, 8 ou 11, **caractérisé en ce que** les matières inorganiques en grains gros ou fins ou en poudresont constituées de marbre, de sable siliceux, d'acide silicique, de craie, de plâtre, de carbonates et/ou d'oxydes métalliques.

13. Agent de revêtement selon la revendication 1 à 4, 8 ou 11, **caractérisé en ce que** la part des matières inorganiques en grains gros ou fins ou en poudre est de 0 à 40 % en poids, de préférence entre 5 et 25 % en poids.

14. Agent de revêtement selon la revendication 1 à 4 ou 8, **caractérisé en ce que** les matières polymères organiques sont en polyéthylène, polypropylène, polytétrafluoroéthylène, mousse de polystyrène, acrylate, caoutchouc et/ou d'autres polysaccharides modifiés ou non.

15. Agent de revêtement selon la revendication 14, **caractérisé en ce que** la part de matières polymères organiques dans les granulés est de 0 à 40 % en poids, de préférence entre 5 et 25 % en poids

16. Agent de revêtement selon la revendication 1 à 15, **caractérisé en ce que** les granulés contiennentdes produits auxiliaires ou additifs courants à hauteur de 0 à 40 % en poids, de préférenceentre1et25 % en poids.

17. Agent de revêtement selon la revendication 1, **caractérisé en ce que** l'additif est un colorant blanc ou coloré, organique ou inorganique.

18. Production de l'agent de revêtement selon la revendication 1 à 17, **caractérisée en ce que**, pour obtenir des effets optiques donnés,les granulés sont mélangés avec de l'eau et, le cas échéant, des fibres teinteset/ou métalliques et/ou des particules métalliques et/ou de la nacre et/ou des particules teintesinorganiques et/ou organiques pour obtenir une masse de revêtement pâteuse et rigide dotée d'une viscosité de 300 à 90 000 mPa·s à 20°C, de préférence entre 1 100 et 30 000 mPa·s à 20°C.

19. Utilisation de l'agent de revêtement selon la revendication 1 à 17, **caractérisée en ce que** la masse de revêtement pâteuse et rigide est appliquée sur la paroi et/ou le plafond à revêtir à l'aide d'un pistolet ou autre moyende projection,de façon connue en tant que telle, cependant que la structure de surface souhaitée est calibrée par la taille des grains projetés.

20. Utilisation de l'agent de revêtement selon la revendication 1 à 17, **caractérisée en ce que** la masse de revêtement pâteuse et rigide est appliquée sur la paroi et/ou le plafond à revêtir au moyen de techniques classiques, par exemple à l'aide d'une truelle.

21. Utilisation de l'agent de revêtement selon la revendication 1 à 17 à des fins décoratives en termes de revêtement, de finition ou d'amélioration de la structurede surfaces intérieures et/ou extérieures.

22. Mélange sec de l'agent de revêtement selon la revendication 1 à 17 contenant 5 à 100 % en poids, de préférence 20 à 90 % en poids, de granulés et 0 à 95 % en poids, de préférence 10 à 80 % en poids, de produits auxiliaires et/ou additifs.

23. Utilisation du mélange sec selon la revendication 22parmélange à l'eau, pour obtenir une masse de revêtement pâteuse et rigide, et application sur la paroi et/ou le plafond à revêtir.
